Europäisches Patentamt

European Patent Office

Office européen des brevets

(19)

(11) Veröffentlichungsnummer: **0 037 569**

**A1**

(12) # EUROPÄISCHE PATENTANMELDUNG

(21) Anmeldenummer: **81102545.1**

(22) Anmeldetag: **03.04.81**

(51) Int. Cl.³: **B 65 G 59/06**
**B 65 G 47/88**

(30) Priorität: **03.04.80 DE 3012989**

(43) Veröffentlichungstag der Anmeldung:
**14.10.81 Patentblatt 81/41**

(84) Benannte Vertragsstaaten:
**GB NL**

(71) Anmelder: **G. Hartner GmbH & Co. KG**
**Theodor-Groz-Strasse 31**
**D-7470 Albstadt 1(DE)**

(72) Erfinder: **Kästle, Herbert**
**Johannesstrasse 16**
**D-7475 Messstetten(DE)**

(74) Vertreter: **Dreiss, Uwe, Dr. jur. Dipl.-Ing. M.Sc et al,**
**Patentanwälte Dreiss & Fuhlendorf Schickstrasse 2**
**D-7000 Stuttgart 1(DE)**

(54) **Magazin für längliche Formteile.**

(57) Die Erfindung bezieht sich auf ein Magazin für längliche Formteile (10), mit zwei parallelen Leisten (14, 15), in deren einander zugewandten Führungsnuten (33, 18) die Formteile (10) horizontal liegend geführt sind und an deren unterem Ende eine Entnahmevorrichtung (37) angeordnet ist, die mit einem Aufnahmeorgan (38) für ein Formteil (10) versehen ist. Dabei sind die parallelen Leisten (14, 15) gegenüber der Senkrechten geneigt und das Sperrorgan (48) der Entnahmevorrichtung (37) ist unterhalb derjenigen Leiste (15) angeordnet, deren Führungsnut (18) senkrecht nach unten offen ist.

EP 0 037 569 A1

./...

Fig. 1

## Beschreibung

Die vorliegende Erfindung bezieht sich auf ein Magazin für
längliche, vorzugsweise im wesentlichen zylindrische Formteile
nach dem Oberbegriff des Anspruchs 1.

In Bearbeitungsanlagen zum bspw. Fräsen von geraden oder spiraligen Nuten in im wesentlichen zylindrische Roh- bzw. Formteile
wird zum Erreichen eines schnellen und stetigen Fertigungsablaufs die Bereitstellung dieser Formteile in einem Magazin vorgenommen. Bei einem bekannten Magazin der oben genannten Art
sind die beiden parallelen Leisten senkrecht stehend angeordnet.
Unter diesen beiden Leisten, d.h. an den Magazinausgang ist die
Entnahmevorrichtung in Form bspw. eines Schiebers angeordnet,
der einerseits Aufnahmeorgan für das betreffende Formteil und
andererseits Sperrorgan für das nachfolgende Formteil ist. Um
als Sperrorgan wirken zu können, muß dieser Schieber der Entnahmevorrichtung über praktisch die gesamte Länge des betreffenden Formteiles bewegt werden, um zu verhindern, daß das nachfolgende Formteil vorzeitig, d.h. vor der Entnahme des vorangehenden Formteiles und vor dem Zurückbewegen des Schiebers,
teilweise oder vollständig in bzw. auf den Schieber gelangt. Der
dadurch zurückzulegende Weg des Schiebers ist relativ groß, so
daß die Periode für das Entnehmen eines Formteils relativ lang
ist. Ein schwerwiegenderer Nachteil des bekannten Magazins besteht jedoch darin, daß in ihm nur solche Formteile gespeichert
bzw. gelagert werden können, die über ihre ganze Länge gleichmäßig zylindrisch ausgebildet sind. Mit anderen Worten, Formteile, die an einem Längenbereich einen Bund, einen konischen
Ansatz oder dgl. von der reinen Zylinderform abweichenden Bereich besitzen, können mit diesem Magazin nicht gehandhabt
werden, da die Schwerpunkt- und Berührungslagen der einzelnen

0037569

übereinander angeordneten Formteile im Magazin dann jeweils unterschiedlich sind und so nicht gewährleistet ist, daß jeweils immer nur ein Formteil entnommen wird und zwar so, daß es durch das nachfolgende Formteil nicht behindert wird.

Aufgabe der vorliegenden Erfindung ist es, ein Magazin der eingangs genannten Art zu schaffen, mit dem im wesentlichen zylindrische Formteile auch dann gespeichert und in einfacher und schneller Weise entnommen werden können, wenn sie an beliebigen Stellen und in beliebiger Weise mit einem Bund, einem konischen Bereich oder dgl. Abweichungen von der zylindrischen Form versehen sind.

Diese Aufgabe wird bei einem Magazin der eingangs genannten Art durch die im Kennzeichen des Anspruchs 1 angegebenen Merkmale gelöst.

Da bei dem erfindungsgemäßen Magazin die parallelen Leisten gegenüber der Senkrechten schräg gestellt sind, sind die Formteile an ihrem einen Ende in derjenigen Formleiste stets gehalten, die aufgrund ihrer von oben nach unten gesehen, zu den Formteilen hinzeigenden Schräge in senkrechter Richtung nach unten hin nicht offen sind. Dies bedeutet, daß dann, wenn am Magazinausgang das betreffende Formteil an seinem anderen Ende durch das Absperrorgan gehalten wird, das Formteil, das aufgrund eines Bundes oder einem konischen Bereich seinen Schwerpunkt nicht in der Längsmitte besitzt, trotzdem nicht kippen kann und dadurch zwischen den Magazinleisten im wesentlichen in seiner horizontalen Lage gehalten wird. Damit können längliche Formteile beliebigen Umrisses gespeichert und entnommen werden. Auch die Entnahmevorrichtung bzw. ihr Sperrorgan vereinfacht sich, da es das dem zu entnehmenden Formteil nachfolgende Formteil lediglich an dessen Ende unterstützen muß, das in derjenigen Leiste gelagert ist, die aufgrund ihrer von dem Formteil wegzeigenden Schräge in senkrechter Richtung
nach unten hin offen ist. Dies bedeutet aber auch, daß der
durch das Sperrorgan zurückzulegende Weg auf ein Minimum beschränkt ist, so daß die Entnahme schneller vor sich gehen
kann als bisher.

Die Größe der Neigung der parallelen Leisten hängt von der
Art, und zwar u.a. vom Gewicht und der zulässigen Toleranz
der Formteile ab, da ein großer Winkel die Reibung zwischen
Formteilen und Magazin erhöht und eine entsprechend große Bewegungskomponente in horizontaler Richtung mit sich bringt und
da andererseits ein zu kleiner Winkel bei zu großen Abmessungstoleranzen in der Länge der Formteile die Gefahr mit sich
bringt, daß diese teilweise an ihrem dem Sperrorgan gegenüberliegenden Ende nicht mehr gehalten werden können. Ein bevorzugter Neigungswinkel liegt deshalb etwa bei 15 - 20$^{\text{o}}$.

Bei dem bisher bekannten Magazin bestand außerdem ein Problem
darin, daß zylindrische Formteile von nur bestimmter Dicke oder
einem relativ kleinen Durchmesserbereich gespeichert werden
konnten. Gemäß einem bevorzugten Ausführungsbeispiel ist deshalb die Nut der einen Leiste mit einer Breite versehen, die
gleich dem Durchmesser des dicksten Ende des zu verwendenden
Formteiles entspricht, wobei diese Leiste mit einem Gegenhalter
versehen ist, der in eine Richtung senkrecht zur Längserstreckung der Formteile verstellbar ist. Dies bedeutet, daß
der Gegenhalter auf den betreffenden Durchmesser eingestellt
wird, wobei es gleichgültig ist, ob in dem dem Gegenhalter
gegenüberliegenden Bereich des Formteiles eine Verdickung vorhanden ist oder nicht. Die Führung erfolgt dabei in jedem Falle
zwischen dem Gegenhalter und der gegenüberliegenden Innenwand
der Nut der betreffenden Leiste. Zweckmäßigerweise ist dabei
die Nut der anderen Leiste als im Querschnitt konische Vertiefung ausgebildet, so daß bei durchmesserkleinen Formteilen
eine gewisse Schrägstellung ohne Verkanten möglich ist.

Zur Anpassung der Entnahmevorrichtung an die Formteile unterschiedlichen Durchmessers und Umrissform, ist das Aufnahmeorgan der Entnahmevorrichtung mit zwei Aufnahmebügeln versehen, die in Richtung zu den horizontal gelagerten Formteilen verstellbar sind. Diese Bügel können damit so eingestellt werden, daß der Abstand ihrer Auflagefläche zu der Unterkante der parallelen Leisten gleich dem maximalen Durchmesser der Formteile ist, so daß das dem aufgenommenen Formteil nachfolgende Formteil stets in einer Ebene über dem Sperrorgan gehalten ist, so daß dieses das betreffende Ende des Formteiles mit Sicherheit untergreifen kann.

Weitere Einzelheiten und Ausgestaltungen der Erfindung sind der folgenden Beschreibung zu entnehmen, in der die Erfindung anhand des in der Zeichnung dargestellten Ausführungsbeispieles näher beschrieben und erläutert wird. Es zeigen:

Fig. 1    die Vorderansicht eines Magazins gemäß einem Ausführungsbeispiel vorliegender Erfindung,

Fig. 2    einen Schnitt längs der Linie II-II der Fig. 1,

Fig. 3    eine Ansicht gemäß Pfeil III der Fig. 1, jedoch teilweise abgebrochen,

Fig. 4    eine Ansicht gemäß Pfeil IV der Fig. 1, ebenfalls teilweise abgebrochen und geschnitten, und

Fig. 5    Beispiele von Formteilen, die im erfindungsgemäßen Magazin gespeichert werden können.

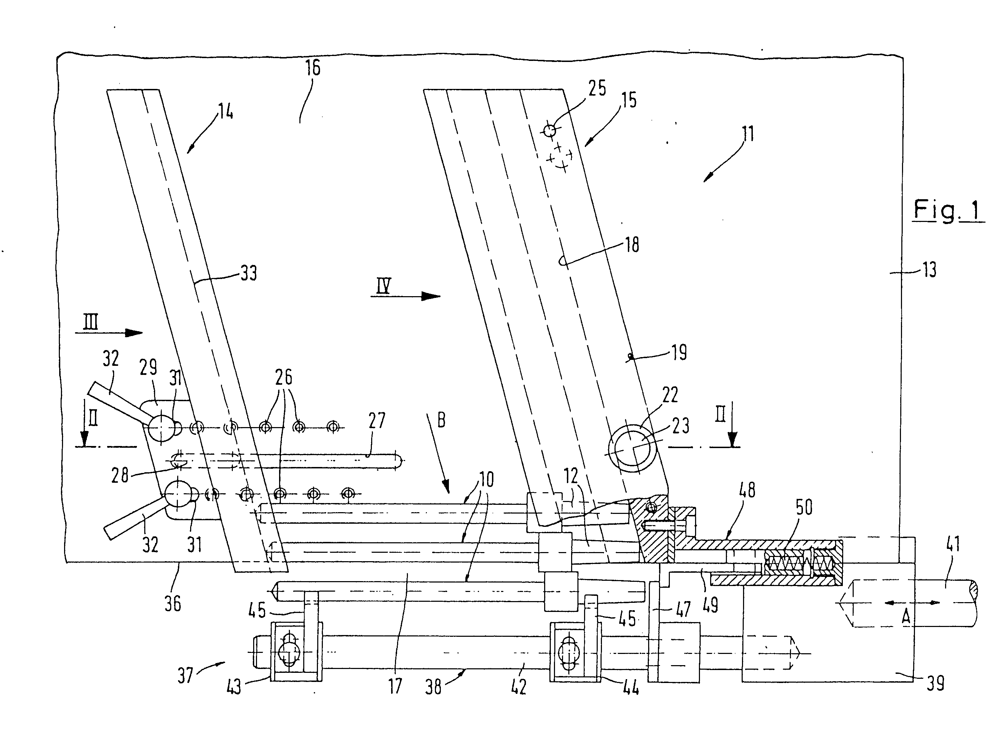

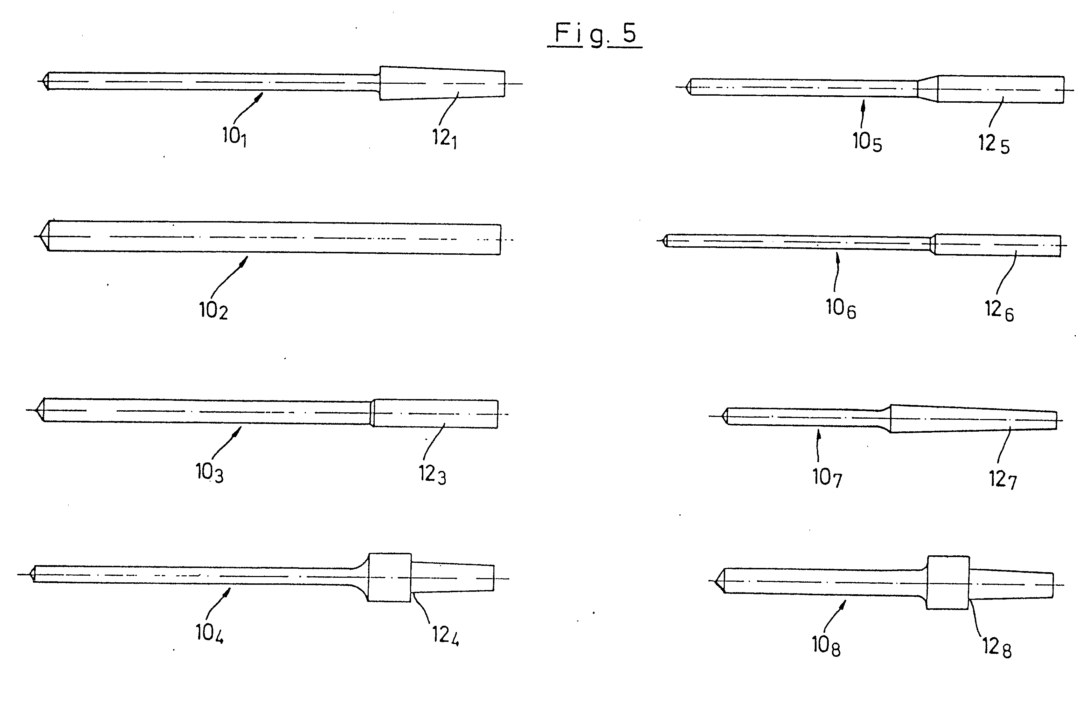

Das in den Fig. 1 bis 4 dargestellte Magazin 11 gemäß einem bevorzugten Ausführungsbeispiel vorliegender Erfindung dient zum Aufnehmen und Speichern und einfachen, aufeinanderfolgenden einzelnen Abgeben von länglichen Formteilen 10, wie sie bspw. als Formteile $10_1$ bis $10_8$ in Fig. 5 dargestellt sind. Es sei jedoch angemerkt, daß die Fig. 5 nicht eine vollständig und abschließende Darstellung der möglichen Formteiltypen ist, sondern nur eine beispielhafte Aufzählung. Wesentlich ist, daß mit dem erfindungsgemäßen Magazin 11 auch solche Formteile behandelt werden können, die nicht, wie bspw. das Formteil $10_2$ rein zylindrisch sind, sondern bspw. konische Enden $12_1$, $12_7$, durchmessergrößere zylindrische Enden $12_3$, $12_5$, $12_6$, Enden $12_4$, $12_8$, bestehend aus einem durchmessergrößeren Bund und einem daran anschließenden durchmesserkleineren konischen Ende oder dgl. besteht. Die anderen vorderen Enden sind mit einer Spitze versehen. Derartige Formteile 10 werden bspw. zum Herstellen von Spiralbohrern und dgl. verwendet.

Das Magazin 11, das insgesamt an einem Maschinenteil 13 befestigt ist, besitzt zwei parallele Führungsleisten 14 und 15, zwischen denen die Formteile 10 in horizontaler Lage schräg von oben nach unten geführt werden, wobei die Formteile 10 unter der Wirkung ihres Eigengewichtes von der Magazineingangsseite 16 zur Magazinausgangsseite 17 gelangen. Die beiden Führungsleisten 14 und 15 sind unter einem kleinen spitzen Winkel, der bevorzugt im Bereich von $15^\circ$ - $20^\circ$ liegt, zur Senkrechten angeordnet. Die leichte Schräglage der beiden parallelen Führungsleisten 14 und 15 ist dabei derart, daß von oben nach unten gesehen die in Fig. 1 linke Führungsleiste 14 zu den im wesentlichen horizontal liegenden Formteilen 10 und die in Fig. 1 rechte Führungsleiste 15 von diesen weggerichtet ist.

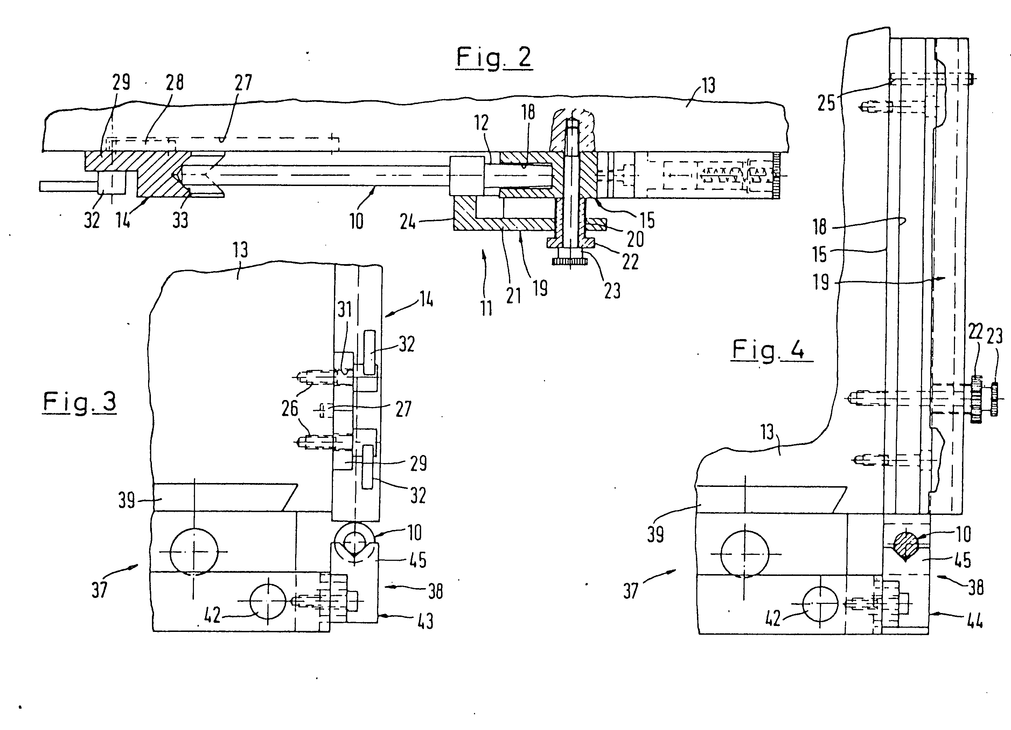

Die Führungsleiste 15, die am Maschinenteil 13 ortsfest gehalten ist, besitzt über ihre ganze Länge eine von ihrer schmalen Stirnseite her offene, U-förmige Nut 18, deren Breite dem größten Durchmesser des betreffenden Endes 12 der zu handhabenden Formteile 10 entspricht. Die Tiefe der Nut 18 muß nur so groß sein, daß sie die Enden 12 der betreffenden Formteile 10 sicher führen kann. Die ortsfeste Leiste 15 ist an ihrer dem Maschinenteil 13 abgewandten Seite mit einem Gegenhalter 19 versehen, der einen etwa L-förmigen Querschnitt besitzt und der im wesentlichen über die gesamte Länge der Führungsleiste 15 verläuft. Der Gegenhalter 19 ist im unteren Bereich an seinem parallel zur Führungsleiste 15 verlaufenden Steg 21 mit einer Gewindebohrung 20 versehen, die von einer zylindrischen Stellschraube 22 durchdrungen ist, die an der Führungsleiste 15 anliegt und auf einer Feststellschraube 23 drehbar gelagert ist, die in die Führungsleiste 15 und im daran anschließenden Maschinenteil 13 eingeschraubt ist, Das obere Ende des Gegenhalters 19 ist an einem senkrecht abstehenden, parallelen Stift 25 geführt. Der senkrecht zur Längserstreckung der Formteile 10 weisende Steg 24 des Gegenhalters 19 kann somit mittels der Stellschraube 22 entsprechend an die Formteile, bzw. wie in Fig. 2 dargestellt, an den Bund des Endes $12_8$ eines Formteiles $10_8$ herangeführt werden. Auf diese Weise werden Formteile 10, die an ihrem Ende einen kleineren Durchmesser besitzen als der Breite der Nut 18 in der Führungsleiste 15 entspricht, zwischen der Anlagefläche des Steges 24 des Gegenhalters 19 und der gegenüberliegenden Innenwandung der Nut 18 geführt. Es versteht sich, daß bei Formteilen, deren Ende 12 im Durchmesser der Breite der Nut 18 etwa entspricht, der Gegenhalter 19 nicht benötigt wird.

Die Führungsleiste 14 ist demgegenüber in Richtung der Längserstreckung der Formteile 10, also zur ortsfesten Führungsleiste 15 hin bzw. von dieser weg horizontal bewegbar am Maschinenteil 13 gehalten. Dazu besitzt das Maschinenteil 13 in zwei horizontalen Linien je eine Reihe von im Abstand angeordneten Innengewindebohrungen 26 und ein zwischen diesen
angeordnetes, parallel dazu verlaufendes Langloch 27, in
welchem ein Zapfen 28 der Führungsleiste 14 für den Verstellvorgang geführt ist. An einer mit der Führungsleiste 14 an
deren den Formteilen abgewandten Seite befestigten Platte 29
sind zwei kurze Langlöcher 31 vorgesehen, die mit den Gewindebohrungen 26 fluchten und durch die je eine Hebelschraube
32 gesteckt wird, die mit einer der Gewindebohrungen 26 verschraubt wird. Auf diese Weise kann die Führungsleiste 14 von
Gewindebohrung zu Gewindebohrung 26 stufenweise und an der
betreffenden Gewindebohrung 26 durch die Langlöcher 27 fein
verstellt werden, so daß sich zwischen den beiden Führungsleisten 14, 15 ein der Länge der betreffenden zu handhabenden
Formteile 10 entsprechender Abstand ergibt. Die Führungsleiste 14 besitzt ebenfalls eine Nut 33, die jedoch als eine
im Querschnitt konische Vertiefung mit einem Grundwinkel von
hier bspw. 90$^{\circ}$ ausgebildet ist. In dieser Nut 33 sind die
anderen vorderen Enden der Formteile 10, die ebenfalls mit
einem Konus versehen sind, gelagert. Diese Art der einer
Spitzenlagerung ähnlichen Lagerung ermöglicht es auch, daß
sich relativ dünne Formteile 10 durch die Verwendung des Gegenhalters 19 zum Maschinenteil 13 hin schräg stellen können,
ohne daß die Formteile 10 in den Nuten der Führungsleisten 14,
15 verkanten.

An der Unterkante des Maschinenteils 13 ist ein Aufnahmeorgan 38 einer Entnahmevorrichtung 37 mittels einer Schwalbenschwanzverbindung an einem Schlitten 39 verschiebbar gelagert,
der über die Stange 41 von einem geeigneten Antrieb gemäß
Doppelpfeil A hin- und herbewegbar ist. An der der Antriebsstange 41 abgewandten Seite des Schlittens 39 steht ein Stab
42 ab, der unterhalb der Enden der Führungsleisten 14, 15 bzw.
unter der Ausgangsseite 17 des Magazins 11 angeordnet ist und parallel zu den horizontal liegenden Formteilen 10 verläuft.
An zwei Bereichen, vorzugsweise des vorderen und hinteren
Endes, ist je eine Traverse 43, 44 angeordnet, die mit einer
senkrecht nach oben abstehenden Platte 45 mit Prismenauflagefläche versehen ist. Die beiden Traversen 43, 44 sind mittels
eines Langloches und einer Befestigungsschraube in einer Richtung senkrecht zur Längserstreckung des Stabes 42 verstellbar,
d.h., sie sind zur Ausgangsseite 17 des Magazins 11 hin
stufenlos verstellbar.

Am Stab 42 ist ferner ein Anlagesteg 47 starr befestigt, der
ebenfalls in Richtung zur Ausgangsseite 17 des Magazins 11
hin vorsteht. An diesem Anlagesteg 47 liegt das vordere Ende
eines Schiebers 49 eines Sperrorgans 48 der Entnahmevorrichtung
37 an. Das Sperrorgan 48 besitzt ein zylindrisches Gehäuse, das
am unteren Ende der Führungsleiste 15 starr befestigt ist und
in dem der Schieber 49 mit seinem hinteren Ende in horizontaler
Richtung hin- und herbewegbar gelagert ist. Der Schieber 49
liegt unter der Wirkung einer Druckfeder 50 innerhalb des Sperrorgangehäuses am Anlagesteg 47 an. Er ist ein Winkelschieber,
der unmittelbar unter dem unteren Ende der Führungsleiste 15
bzw. unmittelbar unterhalb der Ausgangsseite 17 des Magazins 11
angeordnet ist.

Die Funktion des Magazins 11 ist wie folgt: Nach entsprechender
Einstellung der Führungsleiste 14 und des Gegenhalters 19 an
der Führungsleiste 15 auf die Abmessungen der Formteile 10
können diese von der Eingangsseite 17 her nacheinander eingegeben werden, wobei sie in horizontaler Lage, also im Magazin
liegend angeordnet sind. Die einzelnen Formteile 10 stützen sich
mit ihrem einen Ende am Grund der konischen Vertiefung 33 der
Führungsleiste 14 ab, da diese schräg zu ihnen hin verläuft,
und bspw. gemäß Fig. 1 mit ihrem Bund am Bund des darunter liegenden Formteiles nach unten hin ab. Gemäß Fig. 1 ist gerade ein Formteil 10 von den Traversen 43, 44 des Aufnahmeorgans 38 aufgenommen, wobei das Formteil mit seinen Endbereichen in der Prismenauflagefläche liegt. Der Abstand dieser Prismenauflagefläche von der Ausgangsseite 17 des Magazins 11 ist derart gewählt, daß zumindest das in der Führungsleiste 15 liegende Ende mit der Unterkante der Führungsleiste 15 bzw. mit dem Niveau des Ausgangs 17 des Magazins 11 abschließt und damit über der Oberseite des Winkelschiebers 48 des Sperrorgans 48 angeordnet ist. Wird nun der Schlitten 39 der Entnahmevorrichtung 37 gemäß Fig. 1 nach links bewegt, so kann der federvorgespannte Schieber 49 dieser Bewegung folgen und greift so mit seinem vorderen Ende unter das in der Führungsleiste 15 liegende Ende des nachfolgenden Formteiles 10. Während das eine Formteil 10 zu einem anderen Maschinenteil zur Bearbeitung übergeben wird, ist das nachfolgende Formteil 10 einerseits durch die Unterstützung des Schiebers 49 und andererseits dadurch gehalten, daß das gegenüberliegende Ende in der konischen Nut 33 der Führungsleiste 14 liegt und aufgrund der Schräglage der Leiste 14 gegen ein senkrecht nach unten Fallen gesichert ist, da ja die Bewegung der Formteile 10 im Magazin 11 von oben nach unten nicht senkrecht, sondern gemäß Pfeil B schräg verläuft. Mit anderen Worten, der Grund der Nut 33 der Führungsleiste 14 hält das betreffende Ende des Formteils 10 in seiner Lage. Ist nun das eine Formteil 10 abgegeben, kehrt das Aufnahmeorgan 38 mit den Traversen 43, 44 und dem Anlagesteg 47 zurück, der gegen das vordere winklige Ende des Schiebers 49 stößt und diesen entgegen der Wirkung der Feder 50 wieder zurückbewegt, wodurch das nachfolgende Formteil 10 an seinem in der Führungsleiste 15 liegenden Ende freigegeben wird. Damit kann dieses Formteil 10 schräg nach unten auf die Prismenauflageflächen des Aufnahmeorgans 38 fallen.

- Ende der Beschreibung -

PATENTANWÄLTE

# DREISS & FUHLENDORF

SCHICKSTR. 2, D - 7000 STUTTGART 1

0037569

UWE DREISS
Dr. jur., Dipl.-Ing., M. Sc.
JÖRN FUHLENDORF
Dipl.-Ing.

TF (07 11) 24 57 34
TG UDEPAT
TX 7-22 247 udpa d

DREISS & FUHLENDORF, SCHICKSTR. 2, D - 7000 STUTTGART 1

Anmelder:

G. Hartner GmbH & Co. KG.

Theodor-Groz-Straße 31

7470  Albstadt 1

| Amtl. Akt. Z.<br>Off. Ser. No. | Ihr Zeichen<br>Your Ref. | Mein Zeichen<br>My Ref.<br>IIA-2112 | Datum<br>Date<br>3. April 1981 F/s |
|---|---|---|---|

Titel: Magazin für längliche Formteile


## Patentansprüche


1. Magazin für längliche, vorzugsweise im wesentlichen zylindrische Formteile, mit zwei parallelen Leisten, in deren einander zugewandten Führungsnuten die Formteile horizontal liegend geführt sind und an deren unterem Ende eine Entnahmevorrichtung angeordnet ist, die mit einem Aufnahmeorgan für ein Formteil und einem Sperrorgan für das jeweils nachfolgende Formteil versehen ist, dadurch gekennzeichnet, daß die parallelen Leisten (14, 15) gegenüber der Senkrechten geneigt angeordnet sind und daß das Sperrorgan (48) der Entnahmevorrichtung (37) unterhalb derjenigen Leiste (15) angeordnet ist, deren Führungsnut (18) senkrecht nach unten offen ist.


2. Magazin nach Anspruch 1, dadurch gekennzeichnet, daß die parallelen Leisten (14, 15) einen Neigungswinkel von etwa 15 - 20° besitzen.


-2-

0037569

3. Magazin nach Anspruch 1 oder 2, dadurch gekennzeichnet, daß
die Nut (18) der einen Leiste (15) eine Breite aufweist,
die gleich dem Durchmesser des dicksten Endes (12) der zu
handhabenden Formteile (10) entspricht, und daß diese Leiste
(15) mit einem Gegenhalter (19) versehen ist, der in eine
Richtung senkrecht zur Längserstreckung der Formteile (10)
verstellbar ist.

4. Magazin nach Anspruch 3, dadurch gekennzeichnet, daß der
Gegenhalter (19) über die gesamte Länge der Leiste (15) verläuft und an einem Bereich mit einer Verstellschraube (22)
versehen und an mindestens einem anderen Bereich geführt ist.

5. Magazin nach einem der vorhergehenden Ansprüche, dadurch
gekennzeichnet, daß die Nut (33) der anderen Leiste (14)
als im Querschnitt konische, vorzugsweise 90$^{o}$-Vertiefung
ausgebildet ist.

6. Magazin nach einem der vorhergehenden Ansprüche, dadurch
gekennzeichnet, daß die eine Leiste (15) ortsfest und die
andere Leiste (14) in Richtung der Länge der zu handhabenden
Formteile (10) verstellbar ist.

7. Magazin nach einem der vorhergehenden Ansprüche, dadurch
gekennzeichnet, daß das Sperrorgan (48), das wirkungsmäßig
mit dem Aufnahmeorgan (38) verbunden ist, mittels einer Feder
(50) in den Weg der Formteile (10) zwischen den Magazinleisten (14, 15) bringbar ist.

8. Magazin nach Anspruch 7, dadurch gekennzeichnet, daß das
Aufnahmeorgan (38) der Entnahmevorrichtung (37) in horizontaler Richtung verschiebbar ist und mindestens zwei Aufnahmebügel (45) aufweist, die in Richtung zu den horizontal
gelagerten Formteilen (10) hin verstellbar sind.

0037569

9. Magazin nach den Ansprüchen 7 und 8, <u>dadurch gekennzeichnet</u>, daß das verschiebbare Aufnahmeorgan (38) mit einem Anlageteil (47) starr verbunden ist, an dem ein Schieberelement (49) des Sperrorgans (48) anliegt.

- Ende der Ansprüche -

Fig.1

Fig. 2

Fig. 3

Fig. 4

2/3

0037569

Fig. 5

0037569

**Europäisches Patentamt**

## EUROPÄISCHER RECHERCHENBERICHT

Nummer der Anmeldung

EP 81 10 2545

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>US - A - 2 385 521</u> (MEAD) <br> * Seite 1, Spalte 2, Zeilen 19-55; Seite 2, Spalte 1, Zeilen 1-28; Figuren 1-5 * <br><br> -- | 1,6 |
| | <u>DE - A - 2 544 635</u> (A.G.A.) <br> * Seite 5, Zeilen 23-31; Seite 6; Figuren 1-4 * <br><br> -- | 1 |
| | <u>FR - A - 2 185 213</u> (ALUSUISSE) <br> * Seite 1, Zeilen 29-30; Seite 2, Zeilen 1-19; Figuren * <br><br> -- | 1 |
| | <u>US - A - 2 570 936</u> (FURMINGER) <br> * Spalte 2, Zeilen 4-53; Figuren 1,2 * <br><br> ---- | 1 |

**KLASSIFIKATION DER ANMELDUNG (Int Cl⁴)**

B 65 G 59/06
        47/88

**RECHERCHIERTE SACHGEBIETE (Int Cl.³)**

B 65 G
B 23 Q

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 06-07-1981 | OSTIJN |

EPA form 1503.1   06.78